# EUROPÄISCHE PATENTSCHRIFT

(11) **EP 1 854 832 B1**
(45) Veröffentlichungstag und Bekanntmachung des Hinweises auf die Patenterteilung: **18.07.2012**
(21) Anmeldenummer: 07107405.8
(22) Anmeldetag: 03.05.2007
(51) Int. Cl.: C08G 77/12, C08G 77/20, C09D 183/04, G02B 1/04

(54) **Siliconharzbeschichtung für elektronische Bauteile**
Silicone resin coating for electronic components
Revêtement à base de résine silicone pour composants electroniques

(30) Priorität: 11.05.2006 DE 102006022098; 29.06.2006 DE 102006030003
(43) Veröffentlichungstag der Anmeldung: 14.11.2007
(73) Patentinhaber: Wacker Chemie AG, 81737 München (DE)
(72) Erfinder: Lößel, Georg, 84547, Emmerting (DE); Meisenberger, Manfred, 84489, Burghausen (DE); Staiger, Gerhard, 84375, Kirchdorf (DE)
(74) Vertreter: Gössmann, Christoph Tassilo

(56) Entgegenhaltungen:
- EP-A- 1 544 253
- US-A- 2 832 794
- US-A1- 2006 081 864
- KOPYLOV V M ET AL: "FEATURES OF INFLUENCE OF HC1 ON HYDROLYTIC COPOLYCONDENSATION OF BIFUNCTIONAL ORGANOCHLOROSILANES WITH TRIMETHYLCHLOROSILANE" JOURNAL OF GENERAL CHEMISTRY USSR, CONSULTANTS BUREAU, NEW YORK, NY, US, Bd. 61, Nr. 6, 1. Juni 1991 (1991-06-01), Seiten 1257-1261, XP000274401 ISSN: 0022-1279

## Beschreibung

Die Erfindung betrifft ein Verfahren zur Herstellung eines einkomponentigen, H-Siloxan haltigen additionsvernetzbaren Siliconharzes und das Siliconharz.

Siliconharze werden aufgrund ihrer, den Epoxysystemen, überlegenen Temperatur- und Lichtbeständigkeit immer häufiger als Vergussmaterialien für elektronische Bauteile eingesetzt.

So lehrt die Offenlegungsschrift DE 102 12 119 A1, dass solche Vergussmaterialien sich durch hohe Flexibilität und Weichheit auszeichnen.

Die Patentschrift EP 1 249 875 A2 lehrt, dass gummiartige Polysilicone als Vergussmassen zur Herstellung von z.B. Standard-LEDs verwendet werden. Diese weisen jedoch eine Oberflächenhärte von 50-90 JISA (Shore D 10) auf, was für die geforderte Oberflächenhärte und Kratzfestigkeit zu weich ist. Deshalb wird in dieser Patentschrift auch ein zweifacher Verguss beschrieben. Über den inneren Verguss aus Siliconharzen erfolgt ein zweiter Verguß mit z.B. Epoxyharzen.

In der Japanischen Offenlegungsschrift JP 2004 - 140220 A wird ein transparentes, additionsvernetzendes Siliconharz mit einer Härte von mehr als 60 Shore D als Vergussmasse für Leuchtdioden oder Photodetektoren beansprucht. Diese Art von Siliconharzen zeigen zwar die gewünschten Oberflächeneigenschaften analog den Epoxyharzen. Jedoch ergeben sich wegen der geringen Flexibilität solcher Harze aufgrund der unterschiedlichen thermischen Ausdehnung von Siliconharz und Leiterrahmen bei den industriell geforderten Temperaturcyclentests große Probleme. Daher lehrt uns die Japanische Offenlegungsschrift JP 2004-140220 A, dass solche Siliconharze nicht als 100% Vergussmassen einsetzbar sind, sondern nur in Kombination mit einer Zwischenschicht zwischen Metallleiter und Vergussharz.

Aufgrund dieser oben angeführten Produkteigenschaften, hohe Flexibilität und Weichheit, oder hohe Härte, aber geringe Flexibilität können solche Vergussmassen nur in Teilbereichen bzw. nur mit zusätzlichen Arbeitsschritten unter erhöhtem Aufwand eingesetzt werden.

In der Patentschrift EP 1 424 363 A1 und US 2005/0212008 A1 beschreibt Miyoshi die Herstellung von Siliconharzen für Vergussmassen durch Kombination von prinzipiell 2 Siliconharzkomponenten: Komponente A ist ein Siliconharz mit Alkenylgruppen ohne H-Siloxan (Hydrogen-Si - Gruppen). Komponente B ist ein Siliconharz mit H-Siloxan (Hydrogen-Si-Gruppen), aber ohne Alkenylgruppen. Zu diesen zwei Komponenten A und B wird ein effektiver Katalysator zugemischt (beschrieben als Komponente C).
Diese aus zwei Siliconharzkomponenten zusammengemischte Siliconharzmasse ergibt letztlich ein additionsvernetztes Siliconharz mit hoher Härte (Shore D größer 60) und Flexural Strength von größer 90 MPa. Eine detaillierte Aussage hinsichtlich der Bruchneigung des beschriebenen additionsvernetzten Siliconharzes aufgrund der industriell geforderten Temperaturcyclentests wird nicht gemacht.

Die Patentschrift US 2002/0161140 A1 beschreibt ebenfalls die Herstellung eines additionsvernetzten Siliconharz aus prinzipiell 2 Siliconharzkomponenten: A, einem Alkenylgruppen enthaltenden, H-Siloxan freien Siliconharz. B, einem H-Siloxan enthaltenden, alkenylgruppenfreien Siliconharz.

Zu diesen zwei Komponenten A und B wird ein effektiver Katalysator zugemischt (beschrieben als Komponente C). Nachteilig ist, dass diese Zusammensetzung aus zwei Komponenten besteht. Aus dieser Mischung werden additionsvernetzte Siliconharze erhalten.

Die industrielle Herstellung solcher Harze bedingt durch die Vielzahl notwendiger Komponenten einen extrem großen Aufwand.

Die Umsetzung bzw. Behandlung H-Siloxan enthaltender Siliconharze mit wässriger Base, z.B. wässrige Na0H führt zur Entwicklung von Wasserstoff. Ein Umstand der schon lange bekannt in "Chemie und Technologie der Silicone", 2. Auflage 1968, Seite 574, Kapitel 12.1.2 nebst dort angeführter Literatur beschrieben wird.

Vergussmassen hoher Härte und Bruchfestigkeit für die Verkapselung von LED's sind bekannt. Um diese herzustellen werden Polysiloxane mit unterschiedlichen D-Einheiten kombiniert.

D1 US 2006/081864 A1, Beispiel a-31 offenbart zweikomponentige Vergussmassen, die beispielsweise ein Polysiloxan, das durch Cohydrolyse-Kondensation von Phenyltrichlorsilan, Methylhydrogendichlorsilan, Methylvinyldichlorsilan und Trimethlychlorsilane in Toluol-Wasser hergestellt wird und bei dem mit Methylhydrogendichlorsilan und Methylvinyldichlorsilan also zwei unterschiedliche D-Einheiten vorliegen. Dieses Polysiloxan wird z. B. in Toluol-Wasser hergestellt. Somit verwendet das Herstellungsverfahren in D1 keine Ester als Lösungsmittel. Das auf diese Weise hergestellte Polysiloxanwird mit einem anderen Polysiloxan a-13 mit zwei anderen unterschiedlichen D-Einheiten in Beispiel 4 zu einer Vergussmasse kombiniert.

Auch D2 EP 1 544 253 A offenbart eine mehrkomponentige Polysiloxan-Vergussmasse, die durch Kombination verschiedener Polysiloxane unter denen sich auch ein Polysiloxan mit den D- Einheiten Methylhydrogensiloxy- und Methylvinylsiloxy- befindet, entsteht. es wird jedoch nicht offenbart, wie das Polysiloxan hergestellt wird.

Eine einkomponentige Vergussmasse enthaltend ein Silikonharz mit drei unterschiedlichen D-Einheiten oder dessen Herstellung wird nirgendwo beschrieben.

D3 US2,832,794, Beispiel 7 offenbart die Herstellung von Polysiloxanen durch Cohydrolyse-Kondensation von Chlorsilanen in Xylol/Butylacetat/wässriger HCl, jedoch werden keine Silane eingesetzt, die zu D-Einheiten führen.

Aufgabe der Erfindung ist es den Stand der Technik zu verbessern, insbesondere ein Verfahren zur Verfügung zu stellen, das einfach und möglichst ohne Wasserstoffentwicklung durchführbar ist.

Gegenstand der Erfindung ist ein Verfahren zur Herstellung eines einkomponentigen, H-Siloxan haltigen additionsvernetzbaren Siliconharz dadurch gekennzeichnet dass,
- in einem ersten Schritt in einem Reaktor vollentsalztes Wasser und ein Lösemittelgemisch, das zumindest ein aromatisches Lösungsmittel und zumindest einen Alkylester aufweist, vorgelegt wird, wobei
- in einem zweiten Schritt zu der Vorlage unter Rühren ein Chlorsilangemisch zugegeben wird, wobei es sich bei dem Chlorsilangemisch um eine Komposition handelt, die mindestens eine T-Einheit, mindestens drei verschiedene D-Einheiten und mindestens eine M-Einheit aufweist und wobei die Temperatur nicht über 50 °C liegt, und
- in einem dritten Schritt die Wasserphase des, das einkomponentige H-Siloxan haltige additionsvernetzbare Siliconharz enthaltenden Reaktionsgemisches abgetrennt wird, und
- in einem vierten Schritt die das einkomponentige H-Siloxan haltige additionsvernetzbare Siliconharz enthaltende Phase in einem bis mehreren Waschschritten gewaschen wird, um den Rest-HCl Gehalt zu vermindern, wobei man zum letzten Waschschritt des einkomponentigen H-Siloxan haltigen, additionsvernetzbaren Siliconharzes eine 0,01-1,0%ige wässrige Lösung einer Base, deren pH-Wert zwischen 7,00-8,50 liegt, hinzufügt und die Waschung bei Temperaturen von 20 - 50 °C durchgeführt wird.

### Beschreibung des Herstellungsverfahrens als Batchproduktion

Dazu wird im ersten Schritt in einem Reaktor vollentsalztes Wasser und ein Gemisch geeigneter Lösemittel vorgelegt.
Im zweiten Schritt wird zu der gerührten Vorlage langsam ein entsprechendes Chlorsilangemisch zugegeben. Dabei handelt es sich vorzugsweise um eine Komposition, die mindestens eine T-Einheit mit R = Alkyl oder Aryl, mindestens drei verschiedene D-Einheiten mit R = H, Alkyl, Alkenyl und Aryl und mindestens eine M-Einheit mit R = Alkyl aufweist. Bevorzugt ist eine Komposition bestehend aus T-Einheit mit R = Aryl, mindestens drei verschiedene D-Einheiten mit R= H, Alkyl, Alkenyl und Alkyl/Aryl, sowie mindestens eine M-Einheit mit R = Alkyl C1-C3. Besonders bevorzugt ist eine Komposition bestehend aus T-Einheit mit R = Aryl C6, mindestens drei verschiedene D-Einheiten mit R = Vinyl-Methyl, H-Methyl und Phenyl-Methyl und als M-Einheit mit R = Alkyl C1
Die sich dabei bildende HCl löst sich dabei in der Wasserphase. Dieser Schritt ist dadurch gekennzeichnet, dass während der Zugabe des Chlorsilangemisches die Temperaturen des Reaktionsgemisches nicht über 50 ° C steigen.
Im dritten Schritt wird die Wasserphase des, das einkomponentige H-Siloxan haltige additionsvernetzbare Siliconharz enthaltenden Reaktionsgemisches abgetrennt.
In einem vierten Schritt wird die das einkomponentige H-Siloxan haltige additionsvernetzbare Siliconharz enthaltende Phase in einem bis mehreren Waschschritten sorgfältig auf möglichst niedrige Rest-HCl-Gehalte gewaschen. Dieser vierte Schritt ist
dadurch gekennzeichnet dass man zur letzten Waschung des einkomponentigen H-Siloxan haltigen, additionsvernetzbaren Siliconharzes eine vorzugsweise 0,01-1,00%ige wässrige Lösung, bevorzugt 0,01-0,1%ige wässrige Lösung, besonders bevorzugt 0,01-0,05%ige wässrige Lösung, ganz besonders bevorzugt 0,01 bis 0,02%ige wässrige Lösung einer geeigneten Base, wie Alkali- und Erdalkalimetalle, bevorzugt Natriumhydroxid, besonders bevorzugt Natriumhydrogencarbonat einsetzt, deren pH-Wert = 7,0-8,50, bevorzugt 7,5 bis 8,5 beträgt, die Waschung bei Temperaturen von 20 - 50 °C durchführt, vorzugsweise ohne dass sich gasförmiger Wasserstoff in einer Menge über 40 ppm entwickelt, besonders bevorzugt entwickelt sich kein Wasserstoff.

Man erhält somit einkomponentige H-Siloxan haltige additionsvernetzbare Siliconharze mit Rest-HCl-Gehalten von vorzugsweise kleiner 3 ppm, vorzugsweise einkomponentige H-Siloxan haltige additionsvernetzbare Siliconharze mit Rest-HCl-Gehalten von 0-1 ppm. In einem letzten, fünften Schritt wird das so gereinigte, Lösemittelgemisch haltige Rohprodukt schonend durch Destillation von dem Lösemittelgemisch befreit.

Überraschenderweise wird bei dem erfindungsgemäßen Verfahren nun ohne Wasserstoffabspaltung ein einkomponentiges H-Siloxanhaltiges, additionsvernetzbares Siliconharz in einer Eintopf-Synthese erhalten.

Ein weiterer Gegenstand der Erfindung ist ein einkomponentiges additionsvernetzbares Siliconharz, das die Harzanteile M, D und T mit der allgemeinen Formel 1

M [R**₃**SiO**_{1/2}**]**m** D [R'**₂**SiO**_{2/2}**]**d** T[R"SiO**_{3/2}**]**t** **Formel 1**

aufweist,
wobei das einkomponentige additionsvernetzbare Siliconharz durch m, d, t größer 0 und durch m = 0,01 - 1,00 Gew.%, d = 50,00 - 65, 00 Gew. % und t = 30,00 - 50,00 Gew.% gekennzeichnet ist und R Kohlenwasserstoffe mit C1-C3, R'₂ einfach ungesättigte Kohlenwasserstoffe mit C2-C3, Kohlenwasserstoffe mit C1-C3 , H und aromatische Kohlenwasserstoffe und R" aromatische Kohlenwasserstoffe und gesättigte Kohlenwasserstoffe bedeutet, mit der Maßgabe, daß mindestens drei verschiedene D-Einheiten vorhanden sind.

Beispiele für R sind vorzugsweise Methyl; Ethyl; Propyl. Beispiele für R' sind vorzugsweise H; Methyl, Ethyl, Propyl, Vinyl, Propenyl und Phenyl. Beispiele für R" sind vorzugsweise Phenyl, Chlorphenyl, Naphthyl, Biphenyl, Methylphenyl, Methyl, Ethyl, Propyl.

Das so hergestellte einkomponentige H-Siloxan haltige additionsvernetzbare Siliconharz, im weiteren als einkomponentiges additionsvernetzbares Siliconharz bezeichnet, besteht aus den Harzanteilen M, D und T mit der allgemeinen Formel 1

M [R**₃**SiO**_{1/2}**]**m** D [R'**₂**SiO**_{2/2}**]**d** T[R"SiO**_{3/2}**]**t** **Formel 1**

wobei das erfindungsgemäße einkomponentige additionsvernetzbare Siliconharz durch m, d, t größer 0 und im einzelnen durch m = 0,01 - 1,00 Gew%, d = 50,00 - 65, 00 Gew. % und t = 30,00 - 50,00 Gew.% gekennzeichnet ist und R = Kohlenwasserstoffe mit C1-C3, bevorzugt (Methyl), R'₂ = einfach ungesättigte Kohlenwasserstoffe mit C2-C3, bevorzugt (Vinyl), Kohlenwasserstoffe mit C1-C3, bevorzugt (Methyl), H und aromatische Kohlenwasserstoffe, bevorzugt (Phenyl) und R" aromatische Kohlenwasserstoffe, bevorzugt (Phenyl) sein können.

Vorzugsweise ist das so hergestellte einkomponentige additionsvernetzbare Siliconharz dadurch gekennzeichnet, dass m = 0,01 - 0,60 Gew.%, d = 57,00 - 63,00 Gew.% und t = 35,00 - 40,00 Gew% und R Kohlenwasserstoffe mit C1-C3, bevorzugt (Methyl), R'₂ einfach ungesättigte Kohlenwasserstoffe mit C2-C3, bevorzugt (Vinyl), Kohlenwasserstoffe mit C1-C3, bevorzugt (Methyl), H und aromatische Kohlenwasserstoffe, bevorzugt (Phenyl) und R" aromatische Kohlenwasserstoffe, bevorzugt (Phenyl) sein können.

Besonders bevorzugt ist das einkomponentige additionsvernetzbare Siliconharz dadurch gekennzeichnet, dass m = 0,01 - 0,58 Gew.%, d = 60,00-62,50 Gew.% und t = 36,00 - 37,50 Gew.% und R Kohlenwasserstoffe mit C1-C3, bevorzugt (Methyl), R'₂ einfach ungesättigte Kohlenwasserstoffe mit C2-C3, bevorzugt (Vinyl), Kohlenwasserstoffe mit C1-C3, bevorzugt (Methyl), H und aromatische Kohlenwasserstoffe bevorzugt (Phenyl) und R" aromatische Kohlenwasserstoffe, bevorzugt (Phenyl) sein können.

Das so hergestellte einkomponentige additionsvernetzbare Siliconharz ist weiterhin dadurch gekennzeichnet, dass sich R'₂ des Harzanteils D aus R'a = einfach ungesättigter Kohlenwasserstoffe mit C1-C3, bevorzugt Vinyl, Propenyl, R'b = H-Si-Gruppen, R'c = Kohlenwasserstoffe mit C1-C3 bevorzugt Methyl, Ethyl, Propyl und R'd = aromatische Kohlenwasserstoffe bevorzugt (Phenyl) zusammensetzt, wobei a : b : c : d = 1 : 1,03 : 3,7-4,4 : 1,66-2,4 ist.

Ganz besonders bevorzugt ist ein einkomponentiges additionsvernetzbares Siliconharz dadurch gekennzeichnet, dass sich R'₂ des Harzanteils D aus R'a = einfach ungesättigter Kohlenwasserstoffe mit C1-C3, bevorzugt Vinyl, R'b = H-Si-Gruppen, R'c = Kohlenwasserstoffe mit C1-C3, bevorzugt Methyl und R'd = aromatische Kohlenwasserstoffe bevorzugt (Phenyl) zusammensetzt, wobei a : b : c : d = 1 : 1,03 : 4,2-4,4 : 2-2,4 ist.

Das so hergestellte einkomponentige additionsvernetzbare Siliconharz ist erfindungsgemäß weiterhin dadurch gekennzeichnet dass es unter Verwendung eines effizienten Katalysators, z.B. Metalle, wie Platin, Rhodium, Palladium, Ruthenium und Iridium, vorzugsweise Platin vernetzt wird. Als Platinkatalysatoren werden vorzugsweise Platinmetalle und/oder deren Verbindungen eingesetzt, vorzugsweise Platin und/oder dessen Verbindungen. Beispiele für solche Katalysatoren sind metallisches und fein verteiltes Platin, das sich auf Trägern, wie Siliziumdioxid, Aluminiumoxid oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, insbesondere Platinorganokomlexe, bevorzugt Platin-Divinyltetramethyldisiloxankomplexe mit oder ohne Gehalt an nachweisbarem anorganisch gebundenen Halogen, Bis-(gammapicolin)-platindichlorid sowie Umsetzungsprodukte von Platintetrachlorid mit Olefin und primärem Amin oder sekundärem Amin oder primärem Amin und sekundärem Amin, wie das Umsetzungsprodukt aus in 1-Octen gelöstem Platintetrachlorid mit sec.-Butylamin, oder Ammonium-Platinkomplexe, Platinkatalysatoren für 1-K-Systeme, wie microverkapselte Platinkomplexe oder z.B. Platin-Acetylid-Komplexe.
Der Übergangsmetallkatalysator wird vorzugsweise in Mengen 0,5 bis 500 Gewichts-ppm (Gewichtsanteile je Million Gewichtsteilen), insbesondere 2 bis 400 Gewichts-ppm, jeweils berechnet als elementares Übergangsmetall und bezogen auf das Gesamtgewicht der A- und B-Komponente eingesetzt, bevorzugt werden solche Platinverbindungen, die in Polyorgano-siloxanen löslich sind. Als lösliche Platinverbindungen können beispielsweise die Platin-Olefin-Komplexe der Formeln (PtCl₂.Olefin)₂ und H(PtCl₃.Olefin) verwendet werden, besonders bevorzugt ist der Platin-Divinyltetramethyldisiloxankomplexe. Die Vernetzung erfolgt bei 150°C nach mindestens 1- 2 h und ergibt ein additionsvernetztes Siliconharz, das sich durch eine hohe Oberflächenhärte, Shore D größer 60 und Biegefestigkeit größer 35 N/mm², und gleichzeitig hohe Elastizität, ausgedrückt durch geringe Bruchneigung, auszeichnet, dadurch gekennzeichnet, dass die Bruchneigung 0-2 nach mindestens 50 Cyclen TST (Thermal Shock Test) beträgt. Die oben beschriebene Zugabe eines effektiven Katalysators führt zu folgendem System:
H-Siloxan haltige Siliconharz, einkomponentig: kleiner oder gleich 99 Teile
Effektiver Katalysator: größer oder gleich 1 Teile

### Beispiele

Es werden hier zwei Beispiele beschrieben. Beispiel 1 als erfindungsgemäßes einkomponentiges H-Siloxan haltiges additionsvernetzbares Siliconharz. Beispiel 2 als Referenz ein dem technischen Stand entsprechendes additionsvernetzbares Siliconharz der Wacker Chemie AG: Silres H62A. (siehe auch Patent JP 2004-140220A)

### Beispiel 1: einkomponentiges H-Siloxan haltiges, additionsvernetzbares Siliconharz

In einem 60 Liter Glaskolben, ausgerüstet mit Rührer, Heizung, Destillation mit Kühler und Tropftrichter werden 19360 g VE-Wasser, 6537 g Essigester und 14763 g Toluol vorgelegt.
Zu dieser Vorlage wird ein Chlorsilangemisch bestehend aus 3807 g Phenyl-Silan, 3440 g Phenyl-methyl-Silan, 1502 g H-Methyl-Silan, 1457 g Vinyl-methyl-Silan und 60g M3-Silan mittels eines geeigneten Vorlagegefäßes, z.B. Tropftrichter zu der gerührten Vorlage innerhalb von 1,5 - 2h zugegeben. Die Temperatur des Reaktionsgemisches steigt dabei von 18-20°C zu Dosierbeginn auf 40-50°C bei Dosierende.
Nach erfolgter Reaktion wird die HCl haltige wässrige Phase von dem das Produkt enthaltende Lösemittelgemisch abgetrennt.
Nach zweimaligem Waschen mit je 18000 g VE (VE = vollentsalztem) Wasser wird in einem dritten und letzten Waschgang das so hergestellte H-Siloxan haltige additionsvernetzbare Siliconharz mit einer wässrigen Base bestehend aus 18000 g VE-Wasser und 180 g, oder 18,0 g, oder 9,0 g, oder 3,6 g, oder 1,8 g Natriumhydrogencarbonat und einem pH-Wert der wässrigen Lösung von 7,50-8,5 gewaschen, ohne dass dabei Wasserstoff entsteht. Dabei wird der Rest-HCl-Gehalt des im Lösemittelgemisch gelösten H-Siloxan haltigen additionsvernetzbaren Siliconharzes jeweils auf kleiner 1 ppm reduziert.
Im Anschluss daran erfolgt die Trennung des Lösemittelgemisches vom H-Siloxan haltigen additionsvernetzbaren Siliconharzes mittels schonender Destillation.

### Beispiel 2: einkomponentiges H-Siloxan haltiges, additionsvernetzbares Siliconharz

In einem 60 Liter Glaskolben, ausgerüstet mit Rührer, Heizung, Destillation mit Kühler und Tropftrichter werden 19360 g VE-Wasser, 6537 g Essigester und 14763 g Toluol vorgelegt.
Zu dieser Vorlage wird ein Chlorsilangemisch bestehend aus 3807 g Phenyl-Silan, 1903 g Phenyl-methyl-Silan,
1502 g H-Methyl-Silan, 1457 g Vinyl-methyl-Silan und 60g M3-Silan mittels eines geeigneten Vorlagegefäßes, z.B. Tropftrichter zu der gerührten Vorlage innerhalb von 1,5 - 2h zugegeben. Die Temperatur des Reaktionsgemisches steigt dabei von 18-20°C zu Dosierbeginn auf 40-50°C bei Dosierende.
Nach erfolgter Reaktion wird die HCl haltige wässrige Phase von dem das Produkt enthaltende Lösemittelgemisch abgetrennt.
Nach zweimaligem Waschen mit je 18000 g VE (VE = vollentsalztem) Wasser wird in einem dritten und letzten Waschgang das so hergestellte H-Siloxan haltige additionsvernetzbare Siliconharz mit einer wässrigen Base bestehend aus 18000 g VE-Wasser und 180,0 g, oder 18,0 g, oder 9,0 g, oder 3,6 g, oder 1,8 g Natriumhydrogencarbonat und einem pH-Wert der wässrigen Lösung von 7,0-8,5 gewaschen, ohne dass dabei Wasserstoff entsteht. Dabei wird der Rest-HCl-Gehalt des im Lösemittelgemisch gelösten H-Siloxan haltigen additionsvernetzbaren Siliconharzes jeweils auf kleiner 1 ppm reduziert.
Im Anschluss daran erfolgt die Trennung des Lösemittelgemisches vom H-Siloxan haltigen additionsvernetzbaren Siliconharzes mittels schonender Destillation.

### Referenzbeispiel 2:

Silres H62A; Standardprodukt der Wacker Chemie AG entspricht dem bisherigen Stand der Technik (siehe Patent JP 2004-140220 A)
In einem 4 Liter - Dreihalskolben, mit Auslauf, Thermometer, Kühler, Rührer und Zulaufgefäß ausgerüstet, werden bei Raumtemperatur 1312,5 g eines Chlorsilangemisches und 580 g Toluol vorgelegt.
Das Silangemisch besteht aus den Komponenten Phenyltrichlorsilan, H-Methyl-Dichlorsilan, Vinyl-methyl-Dichlorsilan und Trimethylchlorsilan im Verhältnis 1: 0,2: 0,2: 0,3 (bezogen auf Phenyltrichlorsilan).

Zu der gerührten Vorlage werden nun 185 g Ethanol innerhalb von 40 Minuten zugetropft. Dieses Reaktionsgemisch wird nun 5 Minuten gerührt.
Daran anschließend werden 250 g Wasser (vollentsalzt) innerhalb von 2 Stunden dem gerührten Reaktionsgemisch zudosiert. Diese Mischung wird 10 Minuten gerührt.
Danach werden dem so erhaltenen Reaktionsgemisch 15,65 g Trimethylchlorsilan zugegeben und noch 4 Minuten gerührt.
Nun wird das Reaktionsgemisch für 2 Stunden bei 75-85 °C unter Rückfluß gekocht.
Nach dem Rückflußkochen werden dem Ansatz 187,5 g Toluol und 170 g Wasser (vollentsalzt) zugegeben. Diese Mischung wird 10 Minuten gerührt, um danach 40 Minuten ungerührt zu stehen (Phasentrennung).

Die Wasserphase wird abgetrennt, die übrige das Siliconharz enthaltende Phase wird nochmals mit 500 g Wasser (vollentsalzt) gewaschen, die Wasserphase abgetrennt, und das erhaltene lösemittelhaltige Siliconharz mittels Destillation vom Lösemittel befreit.

### Vergleich der Eigenschaften Oberflächenhärte (Shore D) und Biegefestigkeit

Das erfindungsgemäße einkomponentige H-Siloxan haltige additionsvernetzbare Siliconharz sowie das industriell erhältliche additionsvernetzbare Siliconharz Silres H62 A (Referenzbeispiel 2) werden je mit einer effektiven Katalysatorkomponente, nämlich Platin-Divinyltetramethyldisiloxankomplex, im Verhältnis 99 : 1 vermischt und 2h bei 150°C ausgehärtet.

Die so erhaltenen additionsvernetzten Siliconharze zeigen dabei folgendes Eigenschaftsbild:

| | Shore D | Biegefestigkeit N/mm² |
|---|---|---|
| Beispiel 1 | 73 | 40 |
| Beispiel 2 | 65 | 45 |
| Referenzbeispiel 2 | 60 | 20 |

### Vergleich der Flexibilität am Beispiel der Bruchneigung von LEDs, hergestellt aus Beispiel 1 und Referenzbeispiel 2:

Hier wird die Bruchneigung unmittelbar nach Vernetzung bzw. nach Durchlauf entsprechender Cyclen des Thermal Shock Tests (TST) mittels einer Skala von 0-5 dargestellt. Dabei bedeutet 0-2 keine Risse bzw. nur wenige Microrisse im Probenkörper und 3-5 viele Microrisse bzw. wenig bis viele Macrorisse im Probenkörper. Des weiteren bedeutet ein Ergebnis von 0-2 geringe Bruchneigung, ein Ergebnis von 3-5 deutliche bis starke Bruchneigung.
Bei diesem Thermal Shock Test wird der Probekörper einem oder mehreren Temperaturcyclen von -40 °C bis 110°C ausgesetzt. Für diesen Test werden entsprechende Probekörper verwendet, die aus einem Trägersystem und der 100% Siliconvergußmasse plus dem entsprechenden Anteil eines effektiven Katalysators bestehen.
Diese so präparierten Probekörper werden dann 2h bei einer Temperatur von 150°C ausgehärtet. Die 100% Siliconvergußmasse besteht aus dem erfindungsgemäßen additionsvernetzbaren, H-Siloxan haltigen Siliconharz = Beispiel 1 und dem
Referenzbeispiel 2, einem additionsvernetzbaren Siliconharz welches den bisherigen Stand der Technik darstellt, Silres H62A der Wacker Chemie AG (siehe Patent JP 2004-140220 A)

Die Ergebnisse aus diesem TST-Test sind nachfolgend aufgelistet:

| Bruchneigung | nach 10 Cyclen | nach 55 Cyclen |
|---|---|---|
| Beispiel 1 | 0 | 2 |
| Beispiel 2 | 2 | 2 |
| Referenzbeispiel 2 | 5 | 5 |

Wie zu sehen zeichnen sich die erfindungsgemäßen einkomponentigen H-Siloxan haltigen additionsvernetzbaren Siliconharze als additionsvernetzte Siliconharze durch hohe Oberflächenhärte (Shore D größer 60) bei gleichzeitig hoher Flexibilität (Biegefestigkeit N/mm²) sowie geringer Bruchneigung aus.

Im Gegensatz dazu zeigt ein additionsvernetzbares Siliconharz Referenzbeispiel 2, welches den bisherigen Stand der Technik wiedergibt, deutlich ausgeprägte Bruchneigung aufgrund der zum erfindungsgemäßen, einkomponentigen, H-Siloxan haltigen additionsvernetzbaren Siliconharz unterschiedlichen Zusammensetzung des Molekülanteils D, bestehend aus [R" 2 SiO_{2/2}] d, wobei R" 2 nur aus H und Vinyl besteht (siehe Patent JP 2004 - 140220 A).

### Einsatzmöglichkeiten einkomponentiger, H-Siloxan haltiger, additionsvernetzbarer Siliconharze

Somit sind die erfindungsgemäß hergestellten einkomponentigen H-Siloxan haltigen additionsvernetzbaren Siliconharze als 100% Harz für die Beschichtung elektronischer bzw. elektrotechnischer Bauteile im weitesten Sinne einsetzbar. Insbesondere können diese einkomponentigen H-Siloxan haltigen additionsvernetzbaren Siliconharze gemäß ihrer besonderen Eigenschaften zur Herstellung lichtemittierender Dioden, LED, oder für die Beschichtung von Elektromotoren z.B. Traktionsmotoren oder Hybridmotoren eingesetzt werden.

## Patentansprüche

1. Verfahren zur Herstellung eines einkomponentigen, H-Siloxan haltigen additionsvernetzbaren biegefesten Siliconharzes **dadurch gekennzeichnet dass**,
- in einem ersten Schritt in einem Reaktor vollentsalztes Wasser und ein Lösemittelgemisch, das zumindest ein aromatisches Lösungsmittel und zumindest einen Alkylester aufweist, vorgelegt wird, wobei
- in einem zweiten Schritt zu der Vorlage unter Rühren ein Chlorsilangemisch, wobei es sich bei dem Chlorsilangemisch um eine Komposition handelt, die mindestens eine T-Einheit, mindestens drei verschiedene D-Einheiten und mindestens eine M-Einheit aufweist, zugegeben wird, wobei die Temperatur nicht über 50 °C liegt, und
- in einem dritten Schritt die Wasserphase des, das einkomponentige H-Siloxan haltige additionsvernetzbare Siliconharz enthaltenden Reaktionsgemisches abgetrennt wird, und
- in einem vierten Schritt die das einkomponentige H-Siloxan haltige additionsvernetzbare Siliconharz enthaltende Phase in einem bis mehreren Waschschritten gewaschen wird, um den Rest-HCl Gehalt zu vermindern, wobei zum letzten waschschritt des einkomponentigen H-Siloxan haltigen, additionsvernetzbaren Siliconharzes eine 0,01 - 1,00%ige wässrige Lösung einer Base deren pH-Wert zwischen 7,00-8,50 liegt, hinzugefügt und die Waschung bei Temperaturen von 20 - 50 °C durchgeführt wird.

2. Einkomponentiges additionsvernetzbares Siliconhärz, das die Harzanteile M, D und T mit der allgemeinen Formel 1
M [R₃SiO_{1/2}]**m** D [R'₂SiO_{2/2}]**d** T[R''SiO_{3/2}]**t** Formel 1
aufweist,
wobei das einkomponentige additionsvernetzbare Siliconharz durch m, d, t größer 0 und durch m =0,01 - 1,00 Gew.%, d = 50,00 - 65, 00 Gew. % und t = 30,00 - 50,00 Gew.% **gekennzeichnet** ist und R Kohlenwasserstoffe mit C1-C3, R' einfach ungesättigte Kohlenwasserstoffe mit C2-C3, Kohlenwasserstoffe mit C1-C3 , H und aromatische Kohlenwasserstoffe und R" aromatische oder nicht aromatische Kohlenwasserstoffe bedeutet, mit der Maßgabe, daß mindestens drei verschiedene D-Einheiten vorhanden sind.

3. Einkomponentiges additionsvernetzbares Siliconharz nach Ansprüch 2, **dadurch gekennzeichnet, dass** R Methyl, R' vinyl, Methyl, H und Phenyl und R" Phenyl bedeutet.

4. Einkomponentiges additionsvernetzbares Siliconharz nach Anspruch 2 oder 3, **dadurch gekennzeichnet, dass** m 0,01 - 0,60 Gew.%, d 57,00 - 63,00 Gew.% und t = 35,00 - 40,00 Gew.% bedeutet.

5. Einkomponentiges additionsvernetzbares Siliconharz nach Anspruch 2. oder 3, **dadurch gekennzeichnet, dass** m 0,01 - 0,58 Gew.%, d 60,00-62,50 Gew.% und t = 36,00 - 37,50 Gew.% bedeutet.

6. Einkomponentiges additionsvernetzbares Siliconharz nach einem oder mehreren der Ansprüche 2 bis 5, **dadurch gekennzeichnet, dass** R'₂ in D aus R'a einfach ungesättigter Kohlenwasserstoffe mit C1-C3, R'b H-Si-Gruppen, R'c Kohlenwasserstoffe mit C1-C3 und R'd aromatische Kohlenwasserstoffe zusammensetzt ist, wobei a : b : c : d = 1 : 1,03 : 3,7-4,4 : 1,66-2,4 bedeutet.

7. Einkomponentiges additionsvernetzbares Siliconharz nach einem oder mehreren der Ansprüche 2 bis 5, **dadurch gekennzeichnet, dass** R' in D aus R'a einfach ungesättigter Kohlenwasserstoffe mit C1-C3, R'b H-Si-Gruppen, R'c Kohlenwasserstoffe mit C1-C3 und R'd aromatische Kohlenwasserstoffe zusammensetzt ist, wobei a : b : c : d = 1 : 1,03 : 4,2-4,4 : 2-2,4 bedeutet.

8. Vernetztes Siliconharz **dadurch gekennzeichnet, dass** ein einkomponentiges additionsvernetzbares Siliconharz nach einem oder mehreren der Ansprüche 2 bis 7 oder hergestellt nach Anspruch 1 vernetzt wird und das additionsvernetzte Siliconharz eine Oberflächenhärte von Shore D größer 60 (bei Raumtemperatur 25 °C), eine Biegefestigkeit größer 35 N/mm² aufweist, und die Bruchneigung 0-2 nach mindestens 50 Cyclen TST beträgt.

9. Formkörper, **dadurch gekennzeichnet, dass** er ein Siliconharz nach Anspruch 8 ist.

10. Formkörper nach Anspruch 9, **dadurch gekennzeichnet, dass** der Formkörper eine Beschichtung ist.

## Claims

1. Process for preparing a one-component, H-siloxane-containing addition-crosslinkable flexurally strong silicone resin, **characterized in that**
- in a first step a reactor is initially charged with fully demineralized water and a solvent mixture containing at least one aromatic solvent and at least one alkyl ester,
- in a second step a chlorosilane mixture, said chlorosilane mixture being a composition which comprises at least one T unit, at least three different D units, and at least one M unit, being added to the initial charge with stirring, the temperature not being above 50°C, and
- in a third step the aqueous phase of the reaction mixture comprising the one-component, H-siloxane-containing addition-crosslinkable silicone resin is separated off,
and
- in a fourth step the phase comprising the one-component, H-siloxane-containing addition-crosslinkable silicone resin is washed in one or more washing steps in order to reduce the residual HCl content, the final washing step of the one-component, H-siloxane-containing addition-crosslinkable silicone resin being carried out by adding a 0.01% - 1.00% strength aqueous solution of a base, with a pH between 7.00-8.50, and the washing being carried out at temperatures of 20 - 50°C.

2. One-component addition-crosslinkable silicone resin which comprises the resin fractions M, D and T with the general formula 1
M [R₃SiO_{1/2}]**m** D [R'₂SiO_{2/2}]**d** T[R"SiO_{3/2}]**t** formula 1,
where the one-component addition-crosslinkable silicone resin is identified by m, d, t greater than 0 and by m = 0.01% - 1.00% by weight, d = 50.00% - 65.00% by weight, and t = 30.00% - 50.00% by weight, and R denotes hydrocarbons with C1-C3, R' denotes monounsaturated hydrocarbons with C2-C3, hydrocarbons with C1-C3, H and aromatic hydrocarbons, and R" denotes aromatic or nonaromatic hydrocarbons, with the proviso that at least three different D units are present.

3. One-component addition-crosslinkable silicone resin according to Claim 2, **characterized in that** R is methyl, R' is vinyl, methyl, H, and phenyl, and R" is phenyl.

4. One-component addition-crosslinkable silicone resin according to Claim 2 or 3, **characterized in that** m is 0.01% - 0.60% by weight, d is 57.00% - 63.00% by weight, and t = 35.00% - 40.00% by weight.

5. One-component addition-crosslinkable silicone resin according to Claim 2 or 3, **characterized in that** m is 0.01% - 0.58% by weight, d is 60.00% - 62.50% by weight, and t = 36.00% - 37.50% by weight.

6. One-component addition-crosslinkable silicone resin according to one or more of Claims 2 to 5, **characterized in that** R'₂ in D is made up of R'a monounsaturated hydrocarbons with C1-C3, R'b H-Si groups, R'c hydrocarbons with C1-C3, and R'd aromatic hydrocarbons, where a:b:c:d = 1:1.03:3.7-4.4:1.66-2.4.

7. One-component addition-crosslinkable silicone resin according to one or more of Claims 2 to 5, **characterized in that** R' in D is made up of R'a monounsaturated hydrocarbons with C1-C3, R'b H-Si groups, R'c hydrocarbons with C1-C3, and R'd aromatic hydrocarbons, where a:b:c:d = 1:1.03:4.2-4.4:2-2.4.

8. Crosslinked silicone resin **characterized in that** a one-component addition-crosslinkable silicone resin according to one or more of Claims 2 to 7 or prepared according to Claim 1 is crosslinked and the addition-crosslinked silicone resin has a surface hardness of greater than 60 Shore D (at 25°C room temperature) and a flexural strength of greater than 35 N/mm², and the fracture propensity is 0-2 after at least 50 TST cycles.

9. Shaped body, **characterized in that** it is a silicone resin according to Claim 8.

10. Shaped body according to Claim 9, **characterized in that** the shaped body is a coating.

## Revendications

1. Procédé pour la préparation d'une résine de silicone à un composant, contenant du H-siloxane, réticulable par addition, résistant à la flexion, **caractérisé en ce que**
- dans une première étape, on dispose au préalable, dans un réacteur, de l'eau complètement déminéralisée et un mélange de solvants qui présente au moins un solvant aromatique et au moins un ester alkylique,
- dans une deuxième étape, on ajoute à la charge préalable, sous agitation, un mélange de chlorosilanes, le mélange de chlorosilanes étant une composition qui présente au moins une unité T, au moins trois unités D différentes et au moins une unité M, la température n'étant pas supérieure à 50°C, et
- dans une troisième étape, la phase aqueuse du mélange réactionnel contenant la résine de silicone à un composant, contenant du H-siloxane, réticulable par addition, est séparée et
- dans une quatrième étape, la phase contenant la résine de silicone à un composant, contenant du H-siloxane, réticulable par addition, est lavée dans une à plusieurs étapes de lavage, pour diminuer la teneur résiduelle en HCl, en ajoutant, à la dernière étape de lavage de la résine de silicone à un composant, contenant du H-siloxane, réticulable par addition, une solution aqueuse à 0,01-1,00% d'une base, dont le pH est situé entre 7,00-8,50, et le lavage étant réalisé à des températures de 20-50°C.

2. Résine de silicone à un composant, réticulable par addition, qui présente les proportions de résine M, D et T de formule générale 1
M[R₃SiO_{1/2}]ₘ D[R'₂SiO_{2/2}]_{d} T[R"SiO_{3/2}]ₜ Formule 1
la résine de silicone à un composant, réticulable par addition, étant **caractérisée par** m, d, t supérieurs à 0 et par m = 0,01-1,00% en poids, d = 50,00-65,00% en poids et t = 30,00-50,00% en poids et R signifiant des hydrocarbures en C₁-C₃, R' signifiant des hydrocarbures monoinsaturés en C₂-C₃, des hydrocarbures en C₁-C₃, H et des hydrocarbures aromatiques et R" signifiant des hydrocarbures aromatiques ou non aromatiques, à condition qu'au moins trois unités D différentes soient présentes.

3. Résine de silicone à un composant, réticulable par addition selon la revendication 2, **caractérisée en ce que** R signifie méthyle, R' signifie vinyle, méthyle, H et phényle et R" signifie phényle.

4. Résine de silicone à un composant, réticulable par addition selon la revendication 2 ou 3, **caractérisée en ce que** m vaut 0,01-0,60% en poids, d vaut 57,00-63,00% en poids et t vaut 35,00-40,00% en poids.

5. Résine de silicone à un composant, réticulable par addition selon la revendication 2 ou 3, **caractérisée en ce que** m vaut 0,01-0,58% en poids, d vaut 60,00-62,50% en poids et t vaut 36,00-37,50% en poids.

6. Résine de silicone à un composant, réticulable par addition selon l'une ou plusieurs des revendications 2 à 5, **caractérisée en ce que** R' dans D est composé de R'a hydrocarbures monoinsaturés en C₁-C₃, R'b groupes H-Si, R'c hydrocarbures en C₁-C₃ et R'd hydrocarbures aromatiques, où a:b:c:d = 1:1,03:3,7-4,4:1,66-2,4.

7. Résine de silicone à un composant, réticulable par addition selon l'une ou plusieurs des revendications 2 à 5, **caractérisée en ce que** R' dans D est composé de R'a hydrocarbures monoinsaturés en C₁-C₃, R'b groupes H-Si, R'c hydrocarbures en C₁-C₃ et R'd hydrocarbures aromatiques, où a:b:c:d = 1:1,03:4,2-4,4:2-2,4.

8. Résine de silicone réticulée, **caractérisée en ce qu'**une résine de silicone à un composant, réticulable par addition selon l'une ou plusieurs des revendications 2 à 7 ou préparée selon la revendication 1 est réticulée et la résine de silicone réticulée par addition présente une dureté de surface supérieure à 60 Shore D (à température ambiante de 25°C), une résistance à la flexion supérieure à 35 N/mm², et la tendance à la rupture vaut 0-2 après au moins 50 cycles TST.

9. Corps moulé, **caractérisé en ce qu'**il s'agit d'une résine de silicone selon la revendication 8.

10. Corps moulé selon la revendication 9, **caractérisé en ce que** le corps moulé est un revêtement.
